# EUROPEAN PATENT APPLICATION

(11) **EP 2 696 334 A1**
(43) Date of publication of application: **12.02.2014**
(21) Application number: 12768152.6
(22) Date of filing: 21.02.2012
(51) Int. Cl.: G09F 3/02, B32B 27/00, B42D 15/10, G02B 5/30, G02B 5/32, G02F 1/137, G09F 19/12

(54) **DISTINGUISHING MEDIUM**

(30) Priority: 01.04.2011 JP 2011081596
(71) Applicant: Nhk Spring Co., Ltd., Yokohama-shi, Kanagawa 236-0004 (JP)
(72) Inventor: HOSHINO, Hidekazu, Yokohama-shi Kanagawa 236-0004 (JP); TAKEUCHI, Itsuo, Yokohama-shi Kanagawa 236-0004 (JP); SHIBUYA, Seiya, Yokohama-shi Kanagawa 236-0004 (JP); IDA, Tooru, Yokohama-shi Kanagawa 236-0004 (JP)
(74) Representative: Eisenführ Speiser
(86) International application number: PCT/JP2012/054098
(87) International publication number: WO 2012/137550

(57) **Abstract**

An identification medium cannot be reused when an attempt has been made to remove it from an object by using solvent. A cholesteric liquid crystal layer 102 subjected to a hologram processing 103 is formed while contacting a COP (cycloolefin polymer) layer 101. When the identification medium is removed using a solvent from a state in which it was adhered to an object by an adhesive layer 104, the COP layer 101 is melted by the solvent and is damaged. The COP layer 101 is a layer which functions as a substrate of the identification medium 100, and the identification medium 100 is damaged by contacting with the solvent, as described above, and it is difficult to reuse.

## Description

### Technical Field

The present invention relates to an identification medium that is difficult to reuse in an unauthorized manner.

### Background Art

There is a type of fraud in which an identification medium used for showing that a product is genuine is removed from a genuine product and is adhered to a counterfeit, and the counterfeit is passed off as a genuine product. In order to prevent this type of fraud, techniques for detecting evidence of attempts to remove an identification medium adhered to a genuine product have been proposed (for example, Japanese Unexamined Patent Applications Publications No. Hei10-250225 and No. Hei10-268772).

In these techniques, a coloring layer in which color is developed by an organic solvent or an ink layer in which an ink flows out when exposed to a solvent is formed on the surface of an anticounterfeiting label. As a result, when an attempt is made to remove the anticounterfeiting label using a solvent, color development or ink outflow occurs, and therefore, the anticounterfeiting label is prevented from being reused in an unauthorized manner.

### SUMMARY OF THE INVENTION

In the techniques disclosed in Japanese Unexamined Patent Application Publications No. Hei10-250225 and No. Hei10-268772, the identification medium can be reused by removing a colored ink part, or by reproducing a outflow ink part, since it is not damaged. In view of such circumstances, an object of the present invention is to provide an identification medium that cannot be reused when an attempt has been made to remove it from an object using a solvent.

A first aspect of the present invention has an identification medium including an optical function layer that exhibits an identifying function, and a cycloolefin polymer layer that acts as a substrate of the identification medium.

The cycloolefin polymer has a chemical property which deteriorates very easily when it is contacted with a hydrocarbon-based solvent such as gasoline, kerosene, paint thinner, benzine, etc., and a physical property in which it easily tears or wrinkles when force to forcibly remove it is applied. Therefore, in the case in which an attempt is made to remove the identification medium from the object using a solvent or in the case in which an attempt is made to forcibly remove the identification medium from the object, the cycloolefin polymer layer, which is a substrate, is damaged, and the identification medium cannot be reused after tearing, or the like. In addition, when an attempt is made to forcibly remove the identification medium without using a solvent, evidence of the attempt to remove it remains very clearly, because traces of tearing or traces of wrinkling remain. In particular, the cycloolefin polymer layer is very easily damaged when force is applied in a state in which the solvent is contacted, and an original state cannot be maintained at all. It is difficult to reuse the identification medium in an unauthorized manner by the occurrence of these phenomena.

A second aspect of the present invention has the identification medium according to the first aspect, in which the identification medium has a structure including, in order, seen from an observing side: the cycloolefin polymer layer, the optical function layer, and an adhesive layer. According to the second aspect of the present invention, the cycloolefin polymer layer at the observation surface is damaged when it comes into contact with a solvent, and a function that protects the optical function layer is lost. Therefore, the second aspect makes it difficult to reuse the identification medium.

A third aspect of the present invention has the identification medium according to the first aspect or the second aspect, in which the identification medium has a structure including, in order, seen from an observing side: the optical function layer, the cycloolefin polymer layer, and an adhesive layer. According to the third aspect of the present invention, the cycloolefin polymer layer as a substrate of the identification medium is contacted with the adhesive layer to adhere the identification medium to an object. When the identification medium is removed in an unauthorized manner using a solvent, the solvent is used in order to weaken adhesive force of the adhesive layer. In this case, the solvent is easily contacted with the cycloolefin polymer layer, because the cycloolefin polymer layer is contacted with the adhesive layer. Therefore, the cycloolefin polymer layer is easily damaged by unauthorized removal using a solvent, and the function that makes it difficult to reuse the identification medium in an unauthorized manner is further increased.

A fourth aspect of the present invention has the identification medium according to the third aspect of the present invention, in which a printed pattern is formed on an adhesive layer side of the cycloolefin polymer layer. According to the fourth aspect of the present invention, the cycloolefin polymer layer is used not only as a substrate of the optical function layer but also as a substrate of the printing layer. In addition, it is also expected that ink of the printing layer is dissolved by penetration of the solvent, because there is the printing layer at an adhesive layer side of the cycloolefin polymer layer. Therefore, the function that makes it difficult to reuse the identification medium in an unauthorized manner is further increased.

A fifth aspect of the present invention has the identification medium according to the third aspect or the fourth aspect of the present invention, in which holes or slits are formed on an adhesive surface of the adhesive layer. According to the fifth aspect of the present invention, the holes or slits form a transmitting path, and solvent dropped on the adhesive surface easily penetrates to the cycloolefin polymer layer.

A sixth aspect of the present invention has the identification medium according to the fifth aspect of the present invention, in which a tip of the holes or slits extends to the cycloolefin polymer layer. According to the sixth aspect of the present invention, the solvent easily penetrates to the cycloolefin polymer layer through the holes or slits formed on the adhesive layer. Therefore, a structure, in which the cycloolefin polymer layer is easily damaged by unauthorized removal using a solvent, is formed.

A seventh aspect of the present invention has the identification medium according to any one of the first aspect to the sixth aspect, in which the optical function layer is a cholesteric liquid crystal layer in which a hologram processing is carried out.

A eighth aspect of the present invention has the identification medium according to any one of the first aspect to the seventh aspect, in which the identification medium has a structure including, in order, seen from an observing side: the optical function layer, the cycloolefin polymer layer, a linearly polarizing layer made of material that can be dissolved by a solvent, and an adhesive layer, wherein the optical function layer is a cholesteric liquid crystal layer, the cycloolefin polymer layer is a λ/4 plate in which birefringence is obtained by drawing, a circularly polarizing filter, in which circularly polarized light of a given rotating direction is selectively transmitted from an adhesive layer side to an optical function layer side, is formed by the cycloolefin polymer layer and the linearly polarizing layer, and a rotating direction of circularly polarized light which is selectively transmitted through the circularly polarizing filter is opposite to a rotating direction of circularly polarized light which is selectively reflected by the cholesteric liquid crystal layer.

According to the eighth aspect of the present invention, the rotating direction of the circularly polarized light selectively reflected from the cholesteric liquid crystal layer is opposite to the rotating direction of the circularly polarized light that is transmitted through the circularly polarizing filter layer to an observation surface side. Therefore, when the identification medium is observed through a specific circularly polarizing filter as a viewer, any one of the following two observing states is obtained. A first observing state is one in which the reflected light from the cholesteric liquid crystal layer is observed; however, the reflected light from behind of the linearly polarizing layer is not observed. A second observing state is one in which the reflected light from the cholesteric liquid crystal layer is not observed; however, the reflected light from behind of the linearly polarizing layer is observed. These two observing states are inverted by switching a rotating direction of the circularly polarizing filter as a viewer. By this inversion, a remarkable difference is visually observed, high discriminability is obtained, and a high anticounterfeiting function is obtained.

Then, since the linearly polarizing layer would be melted by a solvent and the cycloolefin polymer layer would be melted by a solvent, in a state in which the identification medium is adhered to the object by a function of the adhesive layer, the cycloolefin polymer layer as a substrate is physically damaged and the above optical property is also lost, when the identification medium is removed by decreasing adhering force of the adhesive layer using a solvent. Therefore, it is difficult to reuse the identification medium in an unauthorized manner by removing it.

A ninth aspect of the present invention has the identification medium according to the eighth aspect of the present invention, in which the linearly polarizing layer made of a material that can be dissolved by a solvent is a coating type polarizing layer. The application-type polarizing layer is formed by applying pigment containing material. The pigment of the application-type polarizing layer is orientated by shearing force applied during applying or by orientation regulating force of an undercoat, and it functions as a linearly polarizing layer in which linearly polarized light in a specific direction is selectively transmitted by the orientation of this pigment.

A tenth aspect of the present invention has the identification medium according to the ninth aspect of the present invention, in which the coating type polarizing layer is a lyotropic liquid crystal dye layer.

According to the present invention, an identification medium is provided that cannot be reused after an attempt has been made to remove it from an object using a solvent.

### BREIF EXPLANATION OF DRAWINGS

Fig. 1 is a cross sectional view showing an embodiment of the present invention.
Fig. 2 is a cross sectional view showing an embodiment of the present invention.
Fig. 3 is a cross sectional view showing an embodiment of the present invention.
Fig. 4 is a cross sectional view showing an embodiment of the present invention.
Fig. 5 is a cross sectional view showing an embodiment of the present invention.

### BEST MODE FOR CARRYING OUT THE INVENTION

### (1) First Embodiment

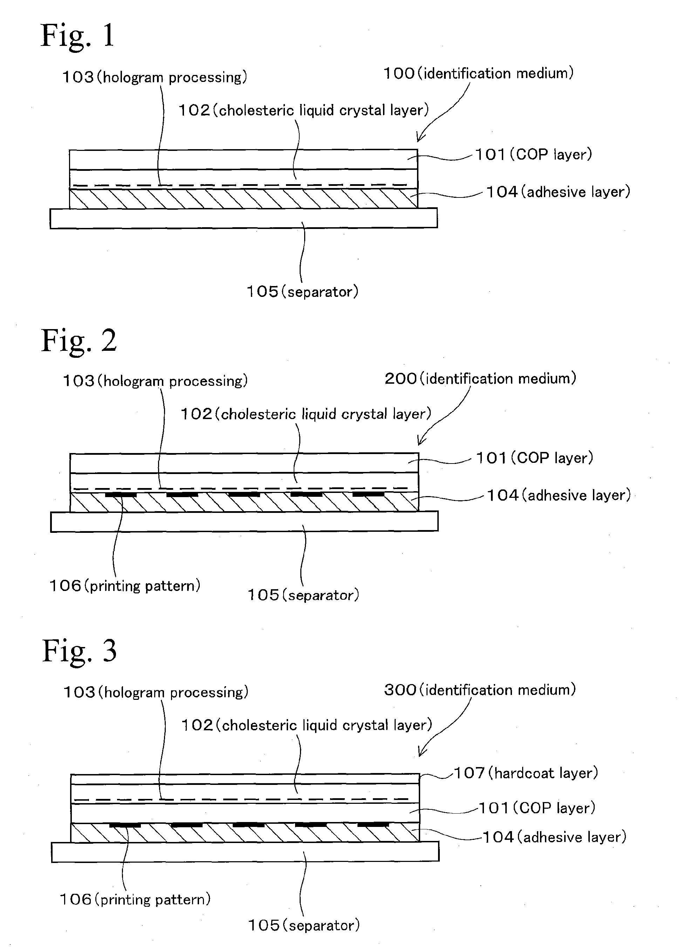

Fig. 1 shows an identification medium 100. The identification medium 100 has a structure which is laminated with a COP layer 101, a cholesteric liquid crystal layer 102 in which a hologram processing 103 is carried out, an adhesive layer 104, and a separator as a release paper 105, in that order, from an observing side.

The COP layer 101 is formed by a cycloolefin polymer in a film shape, and it functions as a substrate for supporting a surface protective layer and the cholesteric liquid crystal layer 102. The cycloolefin polymer film for forming the COP layer 101 has a property that it transmits visible light, and has a property that does not disturb a polarizing state of the visible light to be transmitted since an observing light is transmitted in a structure of the present embodiment. The thickness of the COP layer 101 can be selected from a range of 10 to 200 µm. As the COP layer 101, for example, ZeonorFilm®, available from Zeon Corporation, can be used.

The cycloolefin polymer film is a thermoplastic film made of cyclopentadiene that exists in a C₅ fraction obtained by decomposing crude oil. Here, the C₅ fraction means hydrocarbons having 5 carbon atoms obtained as a by-product by distilling crude oil to refine naphtha and by decomposing the naphtha.

The cholesteric liquid crystal layer 102 is, for example, a layer made of cholesteric liquid crystal having an optical property that selectively reflects red right circularly polarized light. The color of reflected light, in which the cholesteric liquid crystal layer 102 selectively reflects, may be another color such as green. Furthermore, the rotating direction of circularly polarized light which the cholesteric liquid crystal layer 102 selectively reflects is not limited the right rotating direction, and it may be the left rotating direction.

The hologram processing 103 is carried out by pressing a hologram die to the cholesteric liquid crystal layer 102 to form an embossed structure. When the reflected light by the cholesteric liquid crystal layer 102 is observed, a hologram image formed by the hologram processing 103 is observed. As a hologram, figures, patterns, characters, various designs, code designations including digital image information, etc., can be used.

The adhesive layer 104 is a layer of adhesive, and it has a function for adhering and fixing the identification medium 100 to the object. By containing pigments of dark colors such as black, dark blue, etc., in the adhesive that forms the adhesive layer 104, the adhesive layer 104 functions as a light absorption layer, and an identifying effect using reflected light of the cholesteric liquid crystal layer 102 increases. Here, the adhesive layer 104 may be of a color except for dark colors and may be transparent.

The separator 105 is a release paper that covers an exposed surface of the adhesive layer 104 when the identification medium 100 is not being used. In the case in which the identification medium 100 is adhered to an object, the separator 105 is removed to expose the adhesive layer 104, and the adhesive layer 104 is contacted with the object. As a result, the identification medium 100 is adhered to the object by adhesive force of the adhesive layer 104, and is fixed to an object.

### Production Method

First, the cholesteric liquid crystal layer 102 is grown on a substrate (not shown). Then the exposed surface of the cholesteric liquid crystal layer 102 is fixed to one surface of the COP layer 101 by the adhesive, and the above substrate (not shown) is removed. Thus, a laminate of the COP layer 101 and the cholesteric liquid crystal layer 102 is obtained. Next, the hologram processing 103 is carried out by pressing a hologram die to the exposed surface of the cholesteric liquid crystal layer 102. Then, the adhesive layer 104 is formed at a surface in which the hologram processing 103 of the cholesteric liquid crystal layer 102 is carried out, and moreover, the separator 105 is adhered to the exposed surface of the adhesive layer 104, to obtain the identification medium 100 shown in Fig. 1.

### Optical Function

For example, the case in which the cholesteric liquid crystal layer 102 selectively reflects red right circularly polarized light and the adhesive layer 104 is a dark color and absorbs light will be explained. In this case, when the identification medium 100 is viewed from a COP layer 101 side, the overall color is red, and the hologram based on the hologram processing 103 is observed. Then, in this state, when an observing angle is changed by inclining the identification medium 100, the reflected light from the cholesteric liquid crystal layer 102 shows a color shift, and the observed color changes from red to a shorter wavelength side.

Next, when the identification medium 100 is observed from a COP layer 101 side through a right circularly polarizing filter, the red right circularly polarized light from the cholesteric liquid crystal layer 102 is preferentially observed, and the red hologram is seen more clearly. Then, in this state, when the identification medium 100 is inclined to change the observing angle, the reflected light from the cholesteric liquid crystal layer 102 shows a color shift, the reflected light which is observed to be red is shifted to the shorter wavelength side, and color tone change such as red to orange is observed.

In the case in which a left circularly polarizing filter is substituted for the circularly polarizing filter, the red right circularly polarized light reflected from the cholesteric liquid crystal layer 102 is cut off by the left circularly polarizing filter, and the cholesteric liquid crystal layer 102 changes to be transparency, and a dark color of the adhesive layer 104 as an undercoat is observed. In this case, the hologram is not visible.

### Advantages

As described above, the identification medium 100 has a structure in which the cholesteric liquid crystal layer 102 subjected to the hologram processing 103 is formed by contacting with the COP (cycloolefin polymer) layer 101. In this structure, when an attempt is made to remove the identification medium 100 adhered to an object by the adhesive layer 104 using a solvent, the COP layer 101 is melted by the solvent, and it is damaged. The COP layer 101 is a layer which functions as a substrate of the identification medium 100, and the identification medium 100 is also damaged by coming into contact with the above solvent, and it is difficult to reuse it.

That is, the cycloolefin polymer which forms the COP layer 101 has a chemical property which is easily deteriorated by contact with hydrocarbon-based solvents such as gasoline, kerosene, paint thinner, benzine, etc., and has a physical property which is easily torn and is easily wrinkled when applying force to forcibly remove it. Thus, in the case in which an attempt is made to remove the identification medium 100 from an object by using a solvent or in which an attempt is made to forcibly remove the identification medium 100 from an object, the COP layer 101 is easily damaged, or evidence of damage easily remains. In particular, when force is applied to the COP layer 101 in a state soaked in a solvent, it is even more unlikely that it can be used as an identification medium since the above tendency is increased.

The cholesteric liquid crystal layer 102 and the adhesive layer 104 are made of soft material, and are not very rigid. Therefore, when the COP layer 101 is damaged and torn, the cholesteric liquid crystal layer 102 and the adhesive layer 104 are torn with the torn COP layer 101, and the identification medium 100 is damaged. As a result, the damaged identification medium 100 cannot be reused.

In addition, cracks or lines are generated on the COP layer 101 by physically fragile material of the COP layer 101 when force is used in an attempt to remove the identification medium 100 on the COP layer 101, even if the solvent is carefully inserted between the adhesive layer 104 and the object, so that the solvent does not come into contact with the COP layer 101. Once this phenomenon occurs, cracks or lines are visible, and evidence of unauthorized removal remains, even if it is reused.

### (2) Second Embodiment

### Structure

Fig. 2 shows an identification medium 200. The identification medium 200 is an example in which a printed pattern is formed on an opposite surface (lower surface in the figure) to an observation surface of the cholesteric liquid crystal layer 102, in the identification medium 100 in Fig. 1. Other compositions are the same as those of the identification medium 100 in Fig. 1. In this case, a printed pattern 106 is formed by a suitable printing method such as an ink jet method, etc., after a hologram processing 103 is carried out to a cholesteric liquid crystal layer 102. As a printed pattern 106, drawn patterns, patterns, characters, various code designations such as a bar code, etc., can be used.

### Optical Function

It is set that the adhesion layer 104 is a dark color, the printed pattern is green, and the cholesteric liquid crystal layer 102 selectively reflects red right circularly polarized light. In this case, when the identification medium 100 is directly viewed from the COP layer 101 side, the overall color is red, a hologram based on the hologram processing 103 is observed, and a printed pattern 106 is slightly observed. In this state, when the identification medium 100 is inclined so as to change observing angle, reflected light from the cholesteric liquid crystal layer 102 shows a color shift, and color tone changes from red to a shorter wavelength side.

Then, when the identification medium 200 is observed through a right circularly polarizing filter, a red hologram can be clearly observed because the reflected light from the cholesteric liquid crystal layer 102 is preferentially seen. In addition, in this state also, when the identification medium 200 is inclined, the reflected light from the cholesteric liquid crystal layer 102 shows color shift, and it is observed.

Furthermore, when the identification medium 200 is observed through a left circularly polarizing filter, the red right circularly polarized light from the cholesteric liquid crystal layer 102 is cut off by the left circularly polarizing filter, and a green pattern of the printed pattern 106 is clearly observed.

### Advantages

In the case of the identification medium 200 also, in the case in which unauthorized removal using a solvent or physical forcible removal is carried out, the COP layer 101 is damaged, and the identification medium 200 is damaged and cannot be reused.

### (3) Third Embodiment

### Structure

Fig. 3 shows an identification medium 300. The identification medium 300 has a structure which is laminated with a hard coat layer 107 as a protective layer, a cholesteric liquid crystal layer 102 in which a hologram processing 103 is carried out, a COP layer 101 in which a printed pattern 106 is formed on an opposite side (lower surface in figure) to an observing side, an adhesive layer 104, and a separator 105, in that order, from an observing side.

The hard coat layer 107 is a coat layer made of acrylic resin, urethane resin, etc., and it is a resin layer that protects an observing surface of the cholesteric liquid crystal layer 102. The hard coat layer 107 is selected from layers that transmit visible light and do not disturb a polarizing state of transmitted light.

In this example, the COP layer 101 contacts an opposite surface (lower surface in the figure) to an observing surface of the cholesteric liquid crystal layer 102, and it functions as a substrate that supports the cholesteric liquid crystal layer 102. The printed pattern 106 is formed on an adhesive layer 104 side of the COP layer 101.

### Optical Function

An optical function of the identification medium 300 is the same as that of the identification medium 200.

### Production Method

First, an easily peelable substrate (not shown) that can be easily peeled from the surface is prepared, and a hard coat layer 107 is formed on the substrate. Next, a cholesteric liquid crystal layer 102 is formed on an exposed surface of the hard coat layer 107 (lower surface of the hard coat layer 107 in Fig. 3). This may be a method in which the cholesteric liquid crystal layer 102 is directly formed on the hard coat layer 107, and may be a method in which each layer is individually formed and is laminated and fixed on the hard coat layer 107. Here, in the case of the former, the hologram processing 103 is carried out after the cholesteric liquid crystal layer 102 is formed on the hard coat layer 107, and in the case of the later, the hologram processing 103 is carried out after the cholesteric liquid crystal layer 102 is formed on the other substrate.

Next, the exposed surface (lower surface in Fig. 3) of the cholesteric liquid crystal layer 102 is fixed to the COP layer 101 by adhesive, and then, an easily peelable substrate (not shown) is removed from the hard coat layer 107. Thus, a structure in which the hard coat layer 107, the cholesteric liquid crystal layer 102, and the COP layer 102 are laminated from an observing side, is formed. Next, a printed pattern 106 is formed on the exposed surface of the COP layer 101 by printing, and in addition, an adhesive layer of 104 is formed. Finally, a separator 105 is adhered to the exposed surface of the adhesive layer 104, and an identification medium 300 shown in Fig. 3 is obtained.

### Advantages

In the state in which the identification medium 300 is adhered to the object, when an attempt is made to remove the identification medium 300 from an object by using a solvent, the COP layer 101 is melted by the solvent and is damaged. In particular, in the identification medium 300, solvent used for dissolving the adhesive layer 104 is easily contacted with the COP layer 101, since the COP layer 101 is contacted with the adhesive layer 104. Therefore, the COP layer 101 is more easily damaged in unauthorized removal using s solvent. In addition, when the COP layer 101 is dissolved by the solvent, display contents of the printed pattern 106 collapse, and evidence thereof clearly remains. This point is an advantage in which the evidence of the unauthorized removal is clearly formed.

Additionally, when an attempt is made to forcibly remove the identification medium 300 from the object without a solvent, force is applied to the COP layer 101, the COP layer 101 is damaged, and cracks or lines are generated on the COP layer 101, even if it is not damaged. Therefore, when unauthorized removal without a solvent has been carried out, it is also difficult to reuse the identification medium. In particular, when an attempt is made to remove the COP layer 101 using a solvent, the COP layer 101 is reliably damaged because the force is applied to the COP layer 101 in a fragile state. Therefore, it is more difficult to reuse the identification medium.

### (4) Fourth Embodiment

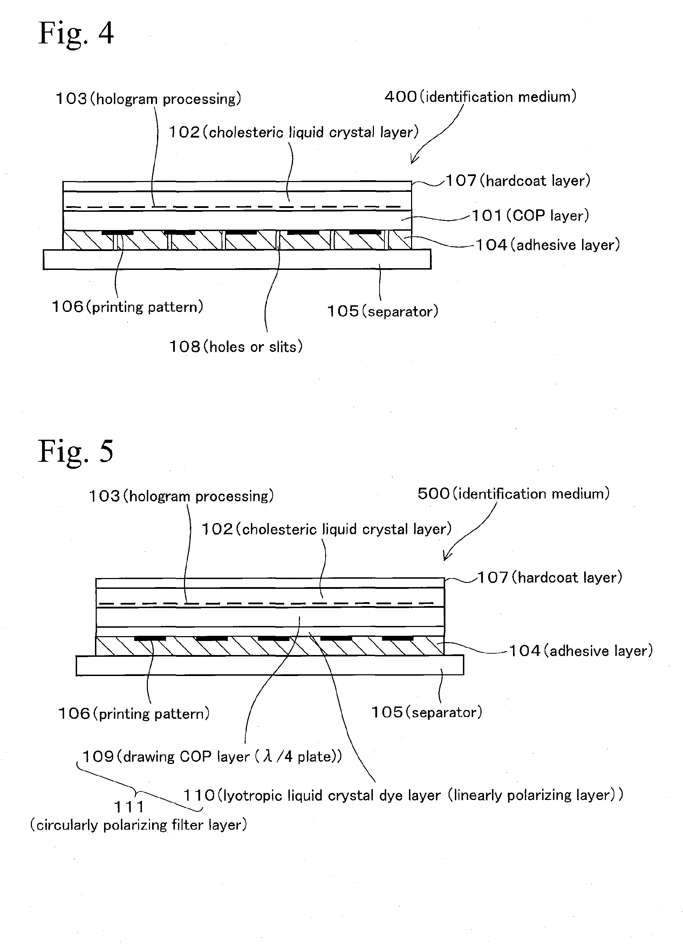

Fig. 4 shows an identification medium 400. The identification medium 400 has a structure in which holes or slits 108 on an adhesive surface of an adhesive layer 104 are formed in the identification medium 300 in Fig. 3. Here, the adhesive surface of the adhesive layer 104 is a surface in which a separator 105 is adhered and is a surface at a side contacted with an object (lower surface in figure) when it is adhered to an object.

The holes or slits 108 are formed on the adhesive surface (a contacting surface with the separator 105) of the adhesive layer 104. Tips of the holes or slits 108 reach to a printed pattern 106 at a part having the printed pattern 106, and reach to the COP layer 101 at a part without the printed pattern 106. Here, the present invention may have a structure in which the holes or slits 108 do not accurately reach to the printed pattern 106 and the COP layer 101; however, it is preferable that the holes or slits 108 reach as near as possible to the printed pattern 106 and the COP layer 101.

The holes or slits 108 are formed by striking needles or edges from the exposed surface of the adhesive layer 104 (lower surface in figure), after the adhesive layer 104 is formed. For example, the slits can be formed by making a cut into the adhesive layer 104.

In the case in which a solvent is used in order to weaken adhesive force of the adhesive layer 104, a structure, in which the solvent penetrates from the holes or slits 108 to a side of the COP layer 101 and easily reaches the COP layer 101, is formed by providing the holes or slits 108. Thus, a structure in which the COP layer 101 is more easily damaged is obtained, when removal using a solvent is carried out. In addition, because the solvent easily reaches the printed pattern 106 through the holes or slits 108, dissolution by the solvent of ink which forms the printed pattern 106 is also expected, and as is apparent from this point also, a structure in which unauthorized removal using the solvent is easily perceived is formed.

### (5) Fifth Embodiment

In the structures shown in Figs. 3 or 4, a COP layer may be used instead of the hard coat layer 107. In this structure, the COP layer 101 held between the cholesteric liquid crystal layer 102 and the adhesive layer 104 and the COP layer used in a part of the hard coat layer 107, which functions as a surface protective layer are damaged, when the identification medium is contacted with the solvent. Therefore, it is very likely that the identification medium cannot be reused, even if a solvent is carefully used.

### (6) Sixth Embodiment

In the structure shown in Fig. 1, a common hologram layer may be used instead of the cholesteric liquid crystal layer 102. In this case, for example, the part of the cholesteric liquid crystal layer 102 can be substituted for a transparent resin layer in which a hologram processing is carried out by embossing, and a hologram layer constructed by an aluminum deposition layer formed thereon.

### (7) Seventh Embodiment

### Structure

In the structure shown in Fig. 3, a circularly polarizing filter layer using a drawn COP layer may be used instead of the COP layer 101. In the following, this example will be explained. Fig. 5 shows an identification medium 500. In the identification medium 300 in Fig. 3, the identification medium 500 uses a circularly polarizing filter layer 111 having a structure in which a drawn COP layer 109 and a lyotropic liquid crystal dye layer 110 are laminated instead of the COP layer 101. Here, a part except for the circularly polarizing filter layer 111 is similar to the identification medium 300 in Fig. 3.

The drawn COP layer 109 is a film processed to show birefringence property by drawing a COP film to one direction. In this example, the drawn COP layer 109 is obtained by drawing the COP film, so as to show birefringence characteristics which functions as a λ/4 plate. In addition, the drawn COP layer 109 also functions as a substrate of the identification medium 500.

The lyotropic liquid crystal dye layer 110 functions as a linearly polarizing layer (linearly polarizing filter) that selectively transmits linearly polarized light in a specific polarizing direction. The circularly polarizing filter layer 111 converts reflected light from the printed pattern 106 (reflected light in an upper direction in figure) into right or left circularly polarized light. In other words, the circularly polarizing filter layer 111 is selectively transmitted by only circularly polarized light in a specific rotating direction to an upper direction in figure as a reflected light from the printed pattern 106.

The rotating direction of the circularly polarized light which selectively transmits the circularly polarizing filter layer 111 is set to a reverse direction against the rotating direction of the circularly polarized light selectively reflected by cholesteric liquid crystal layer 102. For example, in the case of a setting in which the cholesteric liquid crystal layer 102 selectively reflects the right circularly polarized light, the circularly polarizing filter layer 111 is set to selectively transmit the right circularly polarized light to an upper direction in the figure. In contrast, in the case of a setting in which the cholesteric liquid crystal layer 102 selectively reflects the left circularly polarized light, the circularly polarizing filter layer 111 is set to selectively transmit the left circularly polarized light to an upper direction in the figure.

For example, a technology which uses the lyotropic liquid crystal dye layer 110 as a linearly polarizing layer is described in Japanese Unexamined Patent Application Publication No. 2010-250025. The lyotropic liquid crystal dye layer 110 has a structure which laminates many layers in which the pigments are orientated in one direction, and exhibits a property in which linearly polarized light in a specific direction is selectively transmitted by this structure.

In the following, the lyotropic liquid crystal dye layer 110 will be explained. In this example, the lyotropic liquid crystal dye is applied to an exposed surface of the drawn COP layer 109 in a state in which pigments are orientated by using a slit die coater, etc., and is formed. The slit die coater applies the polarizing layer material in a melted state on an applying surface of the COP layer, and draws the applied COP layer in an applied direction while pressing the material. According to this applying method, the pigments are orientated in a specific direction, and an application-type polarizing layer having a property in which the linearly polarized light is selectively transmitted is formed.

The application-type polarizing layer is formed as a lyotropic liquid crystal phase that exhibits a chromonic phase in which indanthrone derivatives, dibenzimidazole derivatives of perylene tetracarboxylic acid, or naphthalene tetracarboxylic acid derivatives are sulfonated. The application-type polarizing layer is insolubilized by desulfonating using barium chloride. By repeating this operation, the application-type polarizing layer is multiple-layered, and a lyotropic liquid crystal dye layer 110 which functions as a linearly polarizing layer is formed. Here, orientation of pigments in the lyotropic liquid crystal dye layer 110 can be imparted by an oriented film or other orientating methods.

The lyotropic liquid crystal dye layer 110 is made of material that is dissolved in a hydrocarbon-based solvent of for example paint thinner, benzine, etc. Here, as a material used for the same purpose except for the above lyotropic liquid crystal dye, liquid crystal added dichromatic pigments, etc., can be used as described in Japanese Unexamined Patent Application Publication No. 2001-330726.

### Optical Function

For example, the cholesteric liquid crystal layer 102 is set to selectively reflect right circularly polarized light, and the circularly polarizing filter layer 111 is set to selectively transmit left circularly polarized light.

In this case, when the identification medium 500 is observed through a viewer of the right circularly polarizing filter, a hologram image formed by the hologram processing 103 can be recognized, because the reflected light from the cholesteric liquid crystal layer 102 is transmitted through the viewer. In contrast, the reflected light from the printed pattern 106 changes to linearly polarized light at a stage in which it is transmitted through the lyotropic liquid crystal dye layer 110 as a linearly polarizing filter, and furthermore, it changes to left circularly polarized light at a stage in which it is transmitted through the drawn COP layer 109 as λ/4 plate, and it is cut off by a viewer as a right circularly polarizing filter and cannot be recognized. That is, the hologram image formed by the hologram processing 103 can be recognized; however, the reflected light from the printed pattern 106 cannot be recognized.

In addition, when this identification medium 500 is observed through a viewer of the left circularly polarizing filter, the reflected light of the right circularly polarized light from the cholesteric liquid crystal layer 102 is cut off by the viewer. However, the reflected light from the printed pattern is transmitted through the viewer of the left circularly polarizing filter and can be visually recognized, since it is transmitted toward an upper direction in the figure of the circularly polarizing filter layer 111 in a state of the left circularly polarized light. That is, the hologram image formed by the hologram processing 103 cannot be recognized; however, the reflected light from the printed pattern 106 can be recognized.

Thus, by switching the left circularly polarizing filter and the right circularly polarizing filter and by observing, a state in which the hologram image formed by the hologram processing 103 is selectively observed, is switched to a state in which the printed pattern 106 is selectively observed. High discriminability can be obtained by this visual switching.

### Advantages

When an attempt is made to reduce adhesive force of the adhesive layer 104 using a hydrocarbon-based solvent, the lyotropic liquid crystal dye layer 110 constructed by the application-type polarizing layer is melted by the solvent, and in addition, the drawn COP layer 109 is contacted with the solvent, and the drawn COP layer 109 is damaged by the solvent. Thus, the identification medium 500 is physically damaged by losing the function as a substrate of the drawn COP layer 109. In addition, an optical function of the circularly polarizing filter layer 111 is lost. In the case in which the physical damage is imperfect, by deteriorating the optical function of the circularly polarizing filter layer 111, the above visually remarkable difference is lost even if a recognizable optical function is partial, and evidence of unauthorized use can be clearly visually confirmed. Therefore, it is even more difficult to be reused by unauthorized removal from an object using a solvent. In the case in which the linearly polarizing layer is not constructed by the application-type polarizing layer but is a general linearly polarizing film, the linearly polarizing film has a structure in which a PVA film is drawn after adsorbing dichromatic pigments such as iodine, etc., and is sandwiched by TAC films, and since these materials are not melted or not deteriorated by a hydrocarbon-based solvent, the above advantage is less than that of the case in which the application-type polarizing layer is used.

### (8) Eighth Embodiment

In an identification medium 500 in Fig. 5, an adhesive layer 104 may be made of transparent material. In this case, in order to identify in the same manner as a printed pattern 106, a drawn pattern can be used on the surface of an object in which the identification medium 500 is adhered in addition to the printed pattern 106. Additionally, this structure may be a structure without the printed pattern 106. In this case, the drawn pattern used on the surface of an object in which the identification medium 500 is adhered is a drawn pattern for identifying in the same manner as a printed pattern 106.

### Other Matters

The structures of the first embodiment to the seventh embodiment may be optionally combined with parts or some of the structures. For example, the holes or slits 108 formed on the adhesive layer 104 of the identification medium 400 in Fig. 4 can be added to an adhesive layer 104 of an identification medium 500 in Fig. 5.

## Claims

1. An identification medium comprising
an optical function layer that exhibits an identifying function, and
a cycloolefin polymer layer that acts as a substrate of the identification medium.

2. The identification medium according to claim 1, wherein the identification medium has a structure comprising, in order, seen from an observing side:
the cycloolefin polymer layer,
the optical function layer, and
an adhesive layer.

3. The identification medium according to claim 1 or 2, wherein the identification medium has a structure comprising, in order, seen from an observing side:
the optical function layer,
the cycloolefin polymer layer, and
an adhesive layer.

4. The identification medium according to claim 3, wherein a printed pattern is formed on an adhesive layer side of the cycloolefin polymer layer.

5. The identification medium according to claim 3 or 4, wherein holes or slits are formed on an adhesive surface of the adhesive layer.

6. The identification medium according to claim 5, wherein a tip of the holes or slits is reached to the cycloolefin polymer layer.

7. The identification medium according to any one of claims 1 to 6, wherein the optical function layer is a cholesteric liquid crystal layer in which a hologram processing is carried out.

8. The identification medium according to any one of claims 1 to 7, wherein the identification medium has a structure comprising, in order, seen from an observing side:
the optical function layer,
the cycloolefin polymer layer,
a linearly polarizing layer made of material which can be dissolved by solvent, and
an adhesive layer,
wherein the optical function layer is a cholesteric liquid crystal layer,
the cycloolefin polymer layer is a λ/4 plate in which birefringence is obtained by drawing,
a circularly polarizing filter, in which circularly polarized light of a given rotating direction selectively is transmitted from an adhesive layer side to an optical function layer side, is formed by the cycloolefin polymer layer and the linearly polarizing layer, and
a rotating direction of circularly polarized light which is selectively transmitted through the circularly polarizing filter is opposite to a rotating direction of circularly polarized light which is selectively reflected by the cholesteric liquid crystal layer.

9. The identification medium according to claim 8, wherein the linearly polarizing layer made of a material that can be dissolved by solvent is a coating type polarizing layer.

10. The identification medium according to claim 9, wherein the coating type polarizing layer is a lyotropic liquid crystal dye layer.
